(19) Europäisches Patentamt

European Patent Office

Office européen des brevets

(11) **EP 0 886 117 B1**

(12) **EUROPÄISCHE PATENTSCHRIFT**

(45) Veröffentlichungstag und Bekanntmachung des Hinweises auf die Patenterteilung:
**26.01.2005   Patentblatt 2005/04**

(51) Int Cl.7: **F25D 29/00**, G01K 3/00, G05D 23/19, G01K 3/04, G01D 1/02

(21) Anmeldenummer: **98109568.0**

(22) Anmeldetag: **26.05.1998**

(54) **Verfahren zur Anzeige der Temperatur eines Kühl- und/oder Gefriergeräts**

Method for indicating the temperature of a refrigerator and/or a freezer

Procédé d'indication de la température d'un réfrigérateur et/ou d'un congélateur

(84) Benannte Vertragsstaaten:
**DE ES FR GB IT SE**

(30) Priorität: **18.06.1997   DE 19725868**

(43) Veröffentlichungstag der Anmeldung:
**23.12.1998   Patentblatt 1998/52**

(73) Patentinhaber: **Liebherr-Hausgeräte Ochsenhausen GmbH**
**88416 Ochsenhausen (DE)**

(72) Erfinder: **Gerner, Herbert**
**88416 Erlenmoos (DE)**

(74) Vertreter: **Laufhütte, Dieter, Dr.-Ing. et al**
**Lorenz-Seidler-Gossel**
**Widenmayerstrasse 23**
**80538 München (DE)**

(56) Entgegenhaltungen:
EP-A- 0 689 041          DE-A- 3 642 701
US-A- 4 298 947          US-A- 4 380 155
US-A- 4 455 096          US-A- 4 934 593
US-A- 5 262 758

**Beschreibung**

Die Erfindung betrifft ein Verfahren zur Anzeige der Temperatur eines Kühl- und/oder Gefriergeräts mit einem Kompressor, einem Verdampfer und einem Verflüssiger, mit einem den Kompressor ein- und ausschaltenden Thermostaten und mit einer Einrichtung zur Messung der Temperatur in dem Kühl- oder Gefrierraum mit Temperaturanzeige.

Bei der Messung der Temperatur in dem Lagerraum für das Gut in Kühl- oder Gefriergeräten besteht das Problem, daß aufgrund des Schaltzyklus des Kompressors in dem Lagerraum Temperaturschwankungen auftreten, so daß die Temperaturanzeige des Thermometers die sich aus den Regelschwankungen ergebenden Temperaturen anzeigt und eine eindeutige Aussage über die Temperatur nicht getroffen werden kann.

Es bestünde die Möglichkeit, aus den ständig gemessenen Temperaturen einen Mittelwert zu bilden und diesen zur Anzeige zu bringen. Eine derartige Ermittlung des Mittelwerts der Temperaturen bedingt aber eine verhältnismäßig aufwendige elektronische Rechenschaltung und führt zu einer sehr trägen Temperaturanzeige.

Aufgabe der Erfindung ist es daher, ein Verfahren vorzuschlagen, das eine Anzeige der in dem Lagerraum eines Kühl- und/oder Gefriergeräts herrschenden Temperatur ermöglicht, die unabhängig von den Regelschwankungen ist, so daß eine eindeutige Aussage über die Lagerraumtemperatur möglich ist.

Erfindungsgemäß wird diese Aufgabe dadurch gelöst, daß nur Temperaturen angezeigt und/oder weiterverarbeitet werden, die in einem vorbestimmten festen zeitlichen Abstand zu den Einschalt- oder Ausschaltzeitpunkten des Kompressors stehen.

Nach dem erfindungsgemäßen Verfahren wird die Temperatur in dem Lagerraum eines Kühl- oder Gefriergeräts ständig gemessen. Es wird aber nur die Temperatur zur Anzeige gebracht bzw. weiterverarbeitet, die zu vorbestimmten auf die Schaltpunkte des Kompressors bezogenen Zeitpunkten gemessen wird.

Am einfachsten ist es, daß die Temperaturen angezeigt werden, die zu den Einschalt- und/oder Ausschaltzeitpunkten des Kompressors gemessen werden. Dabei liegen die zu den Einschaltzeitpunkten des Kompressors gemessenen Temperaturen höher als die zu den Ausschaltzeitpunkten gemessenen. Die Abstände der ermittelten Temperaturwerte zu der tatsächlichen mittleren Temperatur können durch Addition oder Subtraktion eines konstanten Werts weitestgehend kompensiert und somit in Kauf genommen werden.

Um die angezeigte bzw. gemessene Temperatur tatsächlich der mittleren Temperatur anzunähern, können die Temperaturen angezeigt werden, die zu vorbestimmten Zeitpunkten nach den Einschalt- und/oder Ausschaltzeitpunkten des Kompressors gemessen werden. Empirisch lassen sich diese vorbestimmten Zeiten so festlegen, daß mit hinreichender Genauigkeit die mittlere Temperatur angezeigt wird.

Des weiteren kann die anzuzeigende und die zur Bildung des Anzeigewertes weiter zu verarbeitende Temperatur (T) auch aus dem gewichteten Mittelwert der zu den Einschaltpunkten ($T_{EIN}$) und den Ausschaltpunkten ($T_{aus}$) gemessenen Temperaturen entsprechend nachfolgender Formel gebildet werden, wobei der Gewichtungsfaktor (g) auf einen Wert von 0 bis 1 festgelegt werden kann:

$$T = g \times T_{EIN} + (1-g) \times T_{aus}.$$

Ein Ausführungsbeispiel der Erfindung wird nachstehend anhand der Zeichnungen deren einziger Figur die Verknüpfung zwischen den Schaltpunkten des Thermostaten und der Temperaturmessung- und Anzeige schematisch dargestellt sind, näher erläutert.

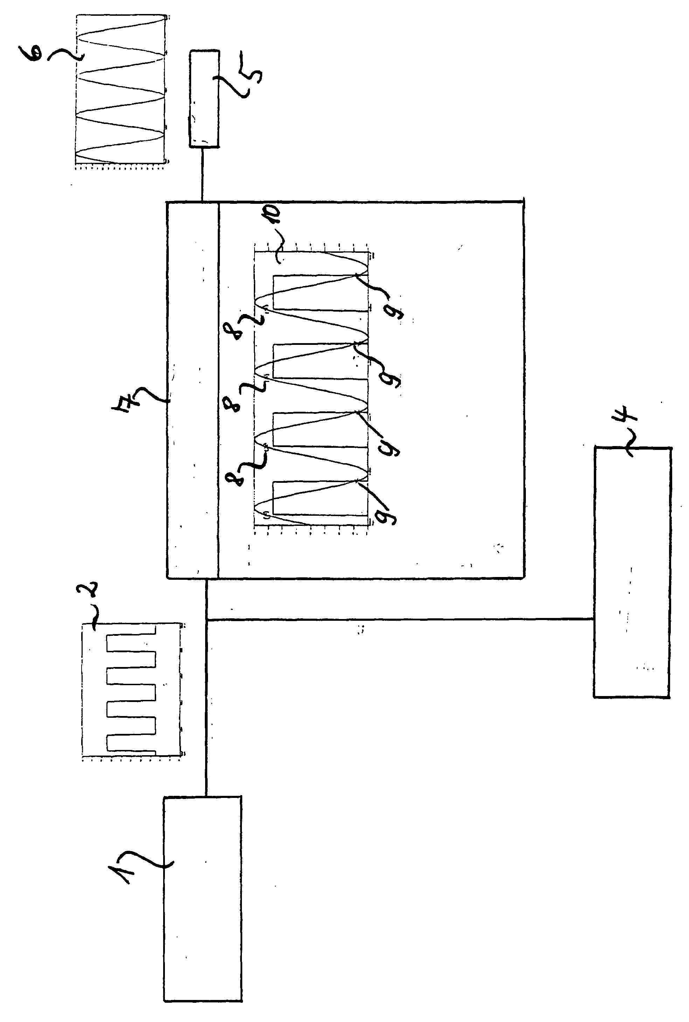

In dem Lagerraum des Kühl- oder Gefriergeräts ist an geeigneter Stelle ein üblicher Thermostat angeordnet, der bei einem vorgegebenen und vorzugsweise einstellbaren Höchstwert der Lagerraumtemperatur bzw. Verdampfertemperatur den Kompressor einschaltet und diesen nach Erreichen einer eingestellten niedrigsten Temperatur wieder ausschaltet. Der Schaltzustand des durch den Kompressor 4 gebildeten Stellgliedes ist aus dem Diagramm 2 ersichtlich.

In dem Lagerraum ist an geeigneter Stelle ein Temperaturfühler 5 angeordnet, der entsprechend dem Diagramm 6 die schwankenden Temperaturen mißt, die sich zwischen den Einschalt- und Ausschaltzeitpunkten des Thermostaten 1 ergeben.

Erfindungsgemäß ist eine elektronische Schaltung 7 mit Temperaturanzeige vorgesehen, aufgrund derer auf einer nicht dargestellten Anzeigeeinrichtung immer nur die Temperaturen angezeigt bzw. zur Ermittlung des Anzeigewertes verwendet werden, die zu den Einschalt- und/oder den Ausschaltzeitpunkten des Thermostaten 1 gemessen worden sind. Die Einschaltzeitpunkte 8 und die Ausschaltzeitpunkte 9 sind in dem Diagramm 10 angegeben worden. Wie aus dem Diagramm 10 ersichtlich ist, liegen die zu den Einschaltzeitpunkten 8 gemessenen Temperaturen des Lagerraums oder einer vorbestimmten Stelle des Lagerraums höher als die Temperaturen 9 zu den Ausschaltzeitpunkten.

Da nach der vorliegenden Erfindung die an einer vorgegebenen Stelle in dem Lagerraum gemessenen Temperaturen immer nur in einem vorbestimmten festen zeitlichen Abstand zu den Einschalt- oder Ausschaltzeitpunkten des Kompressors angezeigt werden, läßt sich die Erfindung mit einfachen elektronischen Schaltungen verwirklichen.

**Patentansprüche**

1.  Verfahren zur Anzeige der Temperatur eines Kühl- und/oder Gefriergeräts

    mit einem Kompressor, einem Verdampfer und einem Verflüssiger,

    mit einem den Kompressor ein- und ausschaltenden Thermostaten und

    mit einer Einrichtung zur Messung der Temperatur in dem Kühl- oder Gefrierraum mit Temperaturanzeige,

    **dadurch gekennzeichnet,**
    **daß** nur Temperaturen angezeigt und/oder weiterverarbeitet werden, die zu den Einschalt- und/oder Ausschaltzeitpunkten (8, 9) des Kompressors (1) oder die in einem vorbestimmten festen zeitlichen Abstand hierzu gemessen werden.

2.  Verfahren nach Anspruch 1, **dadurch gekennzeichnet, daß** nur die Temperaturen angezeigt bzw. weiterverarbeitet werden, die zu vorbestimmten Zeiten nach den Einschalt- und/oder Ausschaltzeitpunkten des Kompressors gemessen werden.

3.  Verfahren zur Anzeige der Temperatur eines Kühl- und/oder Gefriergeräts mit einem Kompressor, einem Verdampfer und einem Verflüssigter, mit einem den Kompressor ein- und ausschaltenden Thermostaten und mit einer Einrichtung zur Messung der Temperatur in dem Kühl- oder Gefrierraum mit Temperaturanzeige, **dadurch gekennzeichnet, daß** die anzuzeigende oder die zur Bildung des Anzeigewertes weiterzuverarbeitende Temperatur auch aus dem gewichteten Mittelwert der zu den Einschaltpunkten und zu den Ausschaltpunkten gemessenen Temperaturen entsprechend nachfolgender Formel gebildet werden kann:

$$T = g \times T_{EIN} + (1-g) \times T_{aus}$$

    wobei der Gewichtungsfaktor (g) auf einen Wert von 0 bis 1 festgelegt wird.

**Claims**

1.  A method for indicating the temperature of a refrigerator and/or freezer
    comprising a compressor, an evaporator and a condenser,
    comprising a thermostat which switches the compressor on and off; and
    comprising a device for the measurement of the temperature in the refrigerator and/or freezer space with a temperature display,
    **characterised in that**
    temperatures are only indicated and/or further processed which are measured at the times of switching on and/or switching off (8, 9) of the compressor (1) or which are measured for this purpose at a predetermined fixed time interval.

2.  A method in accordance with claim 1, **characterised in that** only those temperatures are indicated and/or further processed which are measured at pre-determined times after the times of switching on and/or switching off of the compressor.

3.  A method for indicating the temperature of a refrigerator and/or freezer comprising a compressor, an evaporator and a condenser,
    comprising a thermostat which switches the compressor on and off; and
    comprising a device for the measurement of the temperature in the refrigerator and/or freezer space with a temperature display,
    **characterised in that** the temperature to be indicated or the temperature to be further processed for the forming of the display value can also be formed from the weighted mean value of the temperature measured at the times of switching on and at the times of switching off in accordance with the following formula:

$$T = g \times T_{EIN} + (1-g) \times T_{aus}$$

    where the weighting factor (g) is fixed at a value of 0 to 1.

**Revendications**

1.  Procédé d'indication de la température d'un réfrigérateur et/ou congélateur avec un compresseur, un évaporateur et un condenseur, avec un thermostat mettant en et hors service le compresseur et avec une installation pour mesurer la température dans le réfrigérateur ou congélateur avec un affichage de la température, **caractérisé en ce que** seulement des températures sont indiquées et/ou traitées ultérieurement qui sont mesurées aux instants de mise en et/ou hors service (8,9) du compresseur (1) ou à un écart temporaire fixe prédéterminé relativement à ceux-ci.

2.  Procédé selon la revendication 1, **caractérisé en ce que** seulement les températures sont indiquées respectivement traitées ultérieurement qui sont mesurées à des instants prédéterminés après les instants de mise en et/ou hors service du compresseur.

3. Procédé d'indication de la température d'un réfrigérateur et/ou congélateur avec un compresseur, un évaporateur et un condenseur, avec un thermostat mettant en et hors service le compresseur et avec une installation pour mesurer la température dans l'enceinte de réfrigération ou de congélation avec une indication de la température, **caractérisé en ce que** la température à indiquer ou à traiter ultérieurement pour former la valeur d'affichage peut également être formée à partir de la valeur moyenne pondérée des températures mesurées aux instants de mise en service et aux instants de mise hors service conformément à la formule suivante :

$$T = g \times T_{EN} + (1-g) \times T_{HORS}$$

où le facteur de pondération (g) est fixé à une valeur de 0 à 1.